# EUROPEAN PATENT SPECIFICATION

(11) **EP 1 463 359 B1**
(45) Date of publication and mention of the grant of the patent: **03.08.2005**
(21) Application number: 03290795.8
(22) Date of filing: 28.03.2003
(51) Int. Cl.: H04Q 7/38

(54) **Including a hashed service identifier in a paging message for a service group call**
Einfügen eines hash-codierten Dienstbezeichners in eine Funkrufnachricht für einen Dienst-Gruppenruf
Inclusion d'une identification de service haché dans un message d'appel pour un appel de groupe service

(43) Date of publication of application: 29.09.2004
(73) Proprietor: Nortel Networks Limited, St. Laurent, Quebec H4S 2A9 (CA)
(72) Inventor: Watson, Mark, London W12 9PR (GB); Fauconnier, Denis, 78470 Saint-Rémy-Lès-Chevreuses (FR); Lautier, Laurence, 78370 Plaisir (FR)
(74) Representative: Loisel, Bertrand

(56) References cited:
- WO-A-97/22217
- WO-A-03/015440
- US-A- 5 918 177

## Description

The present invention relates to the provision of services to wireless subscriber stations through a communication network.

It is known to provide services in systems where wireless stations are constantly or periodically listening to the communication channels over which the service is delivered. Such operating mode results in a significant power consumption for the wireless stations, particularly detrimental to their autonomy if the actual transmission over the channels is sparse.

For some new services, it is planned to make an announcement of the start of a relevant transmission in order to inform the wireless stations of when the communication channels must be listened to. The announcement may be performed by paging a group of wireless stations. Such paging is a quite conventional mode of reaching idle stations, i.e. stations that have no active communication in progress with the network. It is detailed for instance, in the context of UMTS ("Universal Mobile Telecommunication System"), in section 8.1.2 of the technical specification TS 25.331, version 4.1.0, Release 4, "RRC Protocol Specification", published in June 2001 by the 3GPP ("3^{rd} Generation Partnership Project"). An example for such paging is given in the document WO 03/015440.

However, if no indication of the service is incorporated in the paging message, all the paged wireless stations read the specified channels, while only very few of them may actually have a subscription with the service.

Moreover, it is not readily feasible to include in the paging message a unique identifier of the service. Such identifier can be a long binary code not suitable for transmission over a paging channel because the amount of information broadcast on a paging channel has to be minimized to limit the radio interference and to reduce the processing accomplished by the idle stations and hence their power consumption.

Document WO 97/22217 discloses a method for paging a particular wireless station, the paging message including an identifier of a pre-registered set of services. However, this document only permits to notify a particular wireless station.

An object of the present invention is to overcome the above limitations by optimizing the delivery of broadcast or multicast types of services.

The invention proposes a method of providing a service to wireless stations through a telecommunication network as set out in claim 1.

Other aspects of the invention relate to telecommunication network equipment and to wireless stations as set out in claims 5 and 8 respectively.

The invention provides a paging announcement of a starting transmission pertaining to a service identified by means of a hash of a data string including a unique identifier of the service. Such hash has a reduced size compared to the initial data string. Its uniqueness is not guaranteed, but the use of a hash algorithm to generate it minimizes the risk of collision.

Anyway, the unique service identifier is usually transmitted over the broadcast channel or channels bearing the service, so that the wireless stations paged by means of the hashed identifier can check the unique service identifier afterwards, and stop receiving the information if it does not match the stored service identifier. Thus, even if collisions occur (with a probability which can be kept low if the hash code length is sufficient), their only consequence is to make some wireless stations momentarily listen to the channel bearing a service to which they have no subscription. Since the consequences of a collision are not very harmful, it is not necessary to provide a very long paging identifier for the sole purpose of avoiding collisions.

Other features and advantages of the present invention will become apparent in the following description of non-limiting exemplary embodiments, with reference to the appended drawings, in which:
- figure 1 is a block diagram of a system suitable for implementing the invention; and
- figure 2 is a diagram illustrating an example of data string structure usable in an embodiment of the invention.

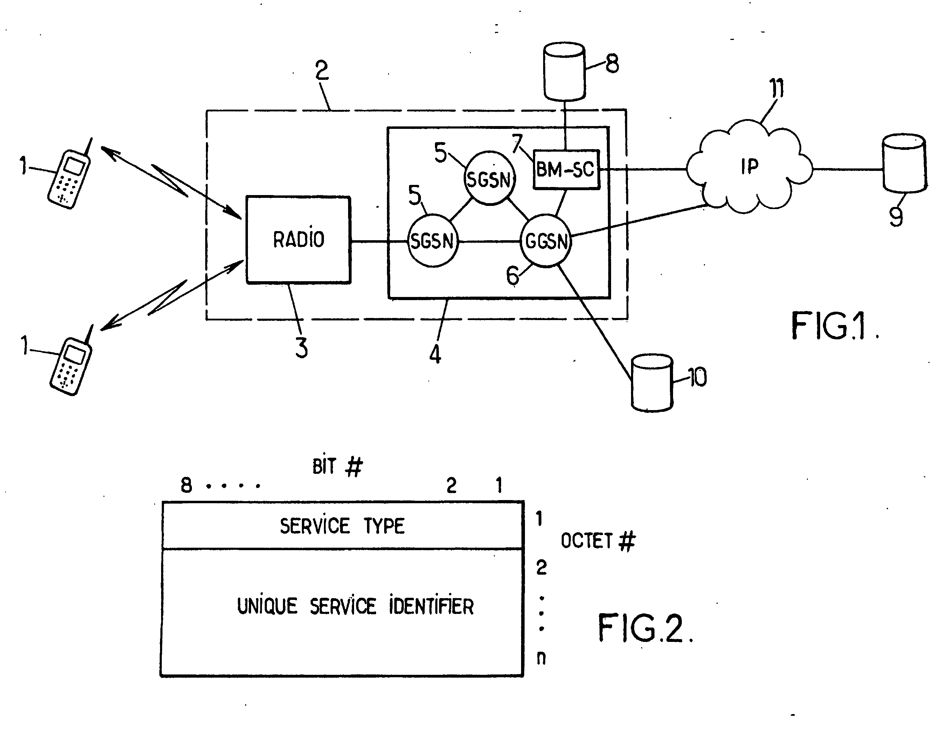

In figure 1 mobile wireless stations 1 communicate with a cellular telecommunication network 2, comprising a radio access network 3 and a core network 4 capable of transmitting data. Although the invention can take place in any system having such entities, it will be described hereinafter in a particular embodiment of a UMTS system, without restricting the scope of the disclosure.

In this context, the wireless stations 1 are called UE ("User Equipment"), the radio access network 3 of the UMTS network is called UTRAN ("Universal Terrestrial Radio Access Network") and the core network 4 comprises interconnected switches called SGSN 5 ("Serving GPRS Support Nodes", connected to the UTRAN), and GGSN ("Gateway GPRS Support Node"). The GGSN 6 is a gateway for interfacing the UMTS network with external data networks, e.g. an IP ("Internet Protocol") network 11.

Servers 8-10 are arranged for providing broadcast services to UEs 1 having corresponding subscriptions. The services rendered can be of various types. In the following, we will more particularly consider services of the family referred to as MBMS ("Multimedia Broadcast/Multicast Service''), which is currently developed and standardized by the 3GPP. A description of its architecture and functionalities can be found in the technical specification TS 23.246, v.0.4.0, "MBMS ; Architecture and Functional Description (Release 6)", published in February 2003 by the 3GPP. MBMS enables a subscriber UE to receive data through a UMTS network in particular after having been informed of the start of a broadcast/multicast transmission.

MBMS uses a specific core network unit called BM-SC 7 ("Broadcast/Multicast Service Centre"), which is responsible for service provisioning and delivery. The BM-SC is typically connected to a GGSN 6 as shown in figure 1.

The services using the MBMS mode of delivery can be rendered by servers 8-9 connected directly or via an external network 11 to the BM-SC 7. If a UE 1 has a subscription with a particular service of the MBMS type (e.g. broadcast of thematic information, like sport results, stock information, event notification, etc.), the corresponding server 8-9 is arranged to send data to the BM-SC 7, so that it is broadcast or multicast to the attention of the subscriber stations. The UE 1 is also able to receive the broadcast or multicast data, since it has a subscription with such service.

For this purpose, each time a transmission is about to be started for the service, which means data is going to be broadcast/multicast, the UMTS network 2 pages a group of UEs to cause them to switch to the relevant broadcast channel. As mentioned previously, paging is a classical functionality of radio telecommunication networks. It consists of sending a message to a group of UEs depending on their location.

In the UMTS system, a feature called Discontinuous Reception (DRX) allows the creation of groups of UEs which only monitor one paging channel. Paging messages are transmitted for a paging group only at some paging occasions within a temporal DRX cycle. Accordingly, the UEs of that group only listen to the paging channel on these occasions. This mechanism is described in the technical specification TS 25.304, version 5.2.0, Release 5, "UE Procedures in Idle Mode and Procedures for Cell Reselection in Connected Mode ", published by the 3GPP in December 2002.

Moreover, it can be noted that a paging indication mechanism has also been defined in the UMTS system to improve the DRX efficiency. It offers the possibility of having a number of subgroups within each group, determined by a specific coding transmitted over a paging indicator channel (PICH). A UE can thus only listen to the PICH corresponding to its subgroup, and then decode the corresponding messages if any.

According to the invention, the paging message used for reaching a group or a subgroup of UEs for which an MBMS transmission is intended is defined in relation with a subscribed service, so that (almost) only the UEs that have a subscription for the relevant service are paged to be warned of a MBMS transmission for the service. For this purpose, the identifier used for the paging group of the subscriber UEs incorporates data depending on the related service.

Each service is in principle identified in a unique way. Such identifier is stored in the UMTS network 2, which means it can be physically stored in a memory within the network or simply retrieved by the network (e.g. from the provider server) when necessary. It is also stored within the subscriber UEs, i.e. in the UE memory or in a subscriber module associated with the UE, on the condition the UE has a subscription with said service. Such storage in the UE can result from a previous provisioning step. Since the number of different services which can be offered through a multimedia network such as UMTS is potentially high, the unique identifier for each service is typically coded on a large binary sequence.

For instance, the unique service identifiers can advantageously comprise a combination of an IP address associated with the service (e.g. IP multicast address over which the service is multicast, IP address of the corresponding service provider server), or a corresponding uniform resource locator (URL), and an indication of the scope within which the above address is unique, for instance the APN ("Access Point Name") of the access point to which the server is connected, as commonly defined in particular in GPRS systems.

Such unique service identifiers can contain more than 200 octets. This long size is incompatible with the dimensioning of the paging channels, especially with the format of usual paging group identifiers (typically less than 20 bits).

According to the invention, the paging group identifier defined by the UMTS network in order to inform the subscribed UEs of the start of a transmission for an associated service includes a hash code obtained from the unique service identifier by using a hash function. Such hash code has a size significantly reduced compared to that of the original identifier. It thus can be well adapted to the paging capabilities.

The hash function is thus performed on a data string including at least part of a unique service identifier. In an advantageous embodiment of the invention, the data string to be hashed also includes an indication of the type of the corresponding service. Indeed, the service can have different types. For instance, services provided by the servers 8-9 are of the MBMS type. But for other services, like the ones offered by another server 10 (not connected to the BM-SC 7 in figure 1, but directly to the GGSN 6), another type can be used. A service platform can also be used between the GGSN 6 and the BM-SC 7.

Many hash functions are well known and can be used in the context of the invention. For instance, they can be based on common cryptographic hash algorithms, like MD2 (as described in RFC 1319, "The MD2 message-digest algorithm", published in April 1992 by the Internet Engineering Task Force (IETF)), SHA-1 (as described in the FIPS publication 180-1: "Secure hash standard", published in April 1994 by the National Institute of Standards and Technology), or MD5 (as described in RFC 1321, "The MD5 message-digest algorithm", Rivest, published in April 1992 by the IETF). All these hash algorithms guarantee a low probability of collisions. In other words, the probability of obtaining an identical hash code from two different data strings is low.

In fact, the hash function used in the present context does not need to have the cryptographic properties of the above-mentioned algorithms. Alternatively, the hash function is based on cyclic codes conventionally used in error detection or correction schemes. For instance, a conventional cyclic redundancy checksum (CRC) is suitable as the hash code derived from the long service identifier, especially if a mechanism for checking a posteriori the value of the entire unique service identifier exists as will be described hereinafter.

An advantage of the CRC, or of other types of simple hash function, is that they are much less computationally intensive than the cryptographic hash functions. This is an important advantage for low-resource devices such as UMTS terminals.

The hash algorithm used for coding the unique service identifiers may consist of extracting the first n bits of the result of one of the above-mentioned hash algorithms applied to the data string including unique service identifier, where n is defined according to the typical size of paging group identifiers and to paging channel capabilities (e.g. n = 16).

The following C code illustrates an example of a simple hash function which can be used in the present invention to obtain a paging identifier ("hash") in the form of an integer variable from a service identifier ("*str") expressed as a character string:

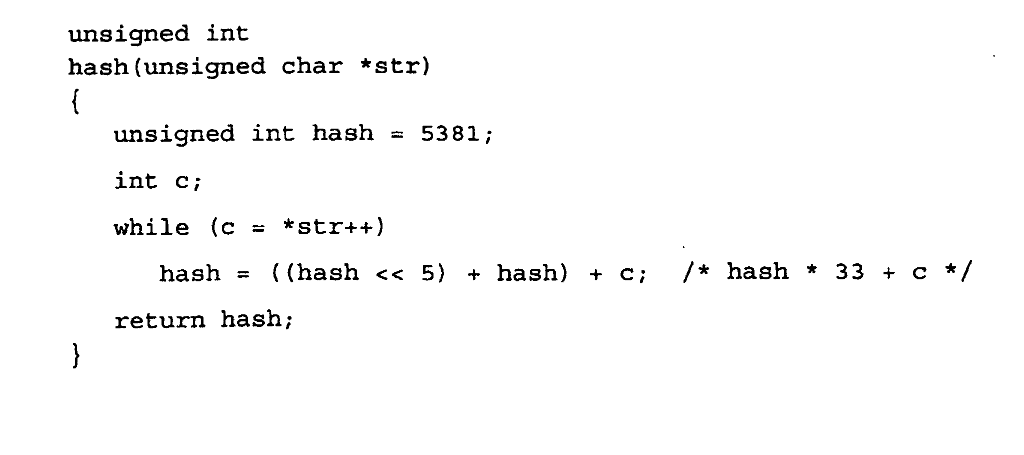

Such computation is performed both in the network 2 and in the subscriber UE to associate that UE with the paging identifier. In the context of UTRAN, the network 2 which performs such computation to associate the paging identifier with the service, is typically the radio network controller (RNC) which interfaces with the SGSN, controls a number of radio transceiver nodes and implements the RRC protocol and in particular the paging function.

Figure 2 illustrates a possible structure of the data string ("*str") submitted to the hash function to compute the paging identifier. In this example, the data string has a first octet designating the service type, with a specific value specified for MBMS services and 255 other values, possibly reserved. The following octets #2, ..., n (where n is a variable integer) contain the unique service identifier, for example as a concatenation of APN and IP multicast address.

Upon reception of a paging message for its paging group, a UE switches to the broadcast or notification channel over which data from server 8 or 9 is transmitted according to the announcement made on the paging channel. The identity of the broadcast channel can be indicated to the UE by signaling or it can be known in advance by the UE.

The unique service identifier is included in the header information transmitted on the MBMS broadcast channel. Therefore, a paged UE can compare the unique service identifier received on that channel with the one stored in its memory. If the two service identifier do not match, it can conclude that it is not concerned by the service, disregard the information received on the MBMS channel and return to the idle mode. If they match, the UE will proceed with receiving the information pertaining to the service over the broadcast channel.

This checking mechanism reduces the effects of collisions resulting from the hashing operation, with a probability 1/65536 if the paging identifiers are made of 16 bits.

As can be understood by the one skilled in the art, the invention can be used with radio telecommunication networks different from UMTS networks. It can also be used for different types of service.

## Claims

1. A method of providing a service to wireless stations (1) through a telecommunication network (2), the service being identified by a unique service identifier stored in the telecommunication network and in at least one subscriber station among said wireless stations, the method comprising the steps of: ,
- determining a paging identifier in the telecommunication network and at said subscriber station, by applying a hash function to a data string including at least part of the unique service identifier;
- associating said subscriber station with the determined paging identifier; and
- prior to transmitting information pertaining to the service over a broadcast channel, transmitting a paging message incorporating said paging identifier to the wireless stations.

2. A method as claimed in claim 1, wherein the information pertaining to the service, transmitted over the broadcast channel, includes the unique service identifier, and wherein a wireless station associated with said paging identifier responds to the paging message by switching to the broadcast channel, receiving the transmitted unique service identifier and checking whether the received service identifier matches the service identifier stored in said wireless station.

3. A method as claimed in claim 1 or 2, wherein said data string further includes an indication of a type of the service.

4. A method as claimed in any one of the foregoing claims, wherein the unique service identifier includes an address associated with the service and an indication of a scope within which said address is unique.

5. Telecommunication network equipment for participating in the provision of services to wireless stations (1), the equipment comprising:
- means for storing unique service identifiers respectively identifying the services;
- means for determining a respective paging identifier associated with each of the services, by applying a hash function to a data string including at least part of the unique identifier for said service; and
- means for transmitting a paging message incorporating the paging identifier associated with one of the services to the wireless stations, prior to transmitting information pertaining to said one of the services over a broadcast channel.

6. Equipment as claimed in claim 5, wherein the information pertaining to the service transmitted over the broadcast channel includes the unique service identifier.

7. Equipment as claimed in claim 5 or 6, wherein the data string including at least part of the unique service identifier further includes an indication of a type of the service.

8. A wireless station for communicating through a telecommunication network (2), the wireless station (1) comprising:
- means for storing at least one unique service identifier identifying a respective service to which the station has a subscription;
- means for determining a paging identifier, by applying a hash function to a data string including at least part of the unique service identifier; and
- means for receiving a paging message incorporating said paging identifier and, in response thereto, switching to reception over a broadcast channel to receive information pertaining to the service as transmitted from the telecommunication network.

9. A wireless station as claimed in claim 8, further comprising means for detecting a service identifier in the information received over the broadcast channel and means for checking whether the detected service identifier matches the stored unique service identifier.

10. A wireless station as claimed in claim 8 or 9, wherein said data string further includes an indication of a type of the service.

## Patentansprüche

1. Verfahren zum Bereitstellen eines Dienstes für Funkstationen (1) über ein Telekommunikationsnetz (2), wobei der Dienst durch einen eindeutigen Dienstidentifizierer identifiziert wird, der im Telekommunikationsnetz und in wenigstens einer Teilnehmerstation unter den Funkstationen gespeichert ist, wobei das Verfahren die Schritte umfasst:
- Ermitteln eines Funkrufidentifizierers im Telekommunikationsnetz und bei der Teilnehmerstation durch Anwenden einer Hash-Funktion auf eine Datenkette, die wenigstens einen Teil des eindeutigen Dienstidentifizierers enthält;
- Verknüpfen der Teilnehmerstation mit dem ermittelten Funkrufidentifizierer; und
- Senden einer Funkrufnachricht, die den Funkrufidentifizierer enthält, zu den Funkstationen vor dem Senden von Informationen, die den Dienst betreffen, über einen Rundsendungskanal.

2. Verfahren nach Anspruch 1, bei dem die Informationen, die den Dienst betreffen und über den Rundsendungskanal gesendet werden, den eindeutigen Dienstidentifizierer enthalten, und bei dem eine Funkstation, die mit dem Funkrufidentifizierer verknüpft ist, auf die Funkrufnachricht antwortet, indem sie auf den Rundsendungskanal umschaltet, den gesendeten eindeutigen Dienstidentifizierer empfängt und prüft, ob der empfangene Dienstidentifizierer mit dem in der Funkstation gespeicherten Dienstidentifizierer übereinstimmt.

3. Verfahren nach Anspruch 1 oder 2, bei dem die Datenkette ferner eine Angabe über einen Typ des Dienstes enthält.

4. Verfahren nach irgendeinem der vorangehenden Ansprüche, bei dem der eindeutige Dienstidentifizierer eine Adresse, die mit dem Dienst verknüpft ist, sowie eine Angabe über einen Wirkungsbereich enthält, innerhalb dem die Adresse eindeutig ist.

5. Telekommunikationsnetzeinrichtung für die Teilnahme an der Bereitstellung von Diensten für Funkstationen (1), wobei die Einrichtung umfasst:
- Mittel zum Speichern eindeutiger Dienstidentifizierer, die jeweils die Dienste identifizieren;
- Mittel zum Ermitteln eines entsprechenden Funkrufidentifizierers, der jeweils mit den Diensten verknüpft ist, durch Anwenden einer Hash-Funktion auf eine Datenkette, die wenigstens einen Teil des eindeutigen Identifizierers für den Dienst enthält; und
- Mittel zum Senden einer Funkrufnachricht, die den Funkrufidentifizierer enthält, der mit einem der Dienste verknüpft ist, zu den Funkstationen vor dem Senden von Informationen, die einen der Dienste betreffen, über einen Rundsendungskanal.

6. Einrichtung nach Anspruch 5, bei der die Informationen, die den Dienst betreffen und über den Rundsendungskanal gesendet werden, den eindeutigen Dienstidentifizierer enthalten.

7. Einrichtung nach Anspruch 5 oder 6, bei der die Datenkette, die wenigstens einen Teil des eindeutigen Dienstidentifizierers enthält, ferner eine Angabe über einen Typ des Dienstes enthält.

8. Funkstation für die Kommunikation über ein Telekommunikationsnetz (2), wobei die Funkstation (1) umfasst:
- Mittel zum Speichern wenigstens eines eindeutigen Dienstidentifizierers, der einen entsprechenden Dienst identifiziert, an dem die Station teilnimmt;
- Mittel zum Ermitteln eines Funkrufidentifizierers durch Anwenden einer Hash-Funktion auf eine Datenkette, die wenigstens einen Teil des eindeutigen Dienstidentifizierers enthält; und
- Mittel zum Empfangen einer Funkrufnachricht, die den Funkrufidentifizierer enthält, und in Reaktion hierauf zum Umschalten auf den Empfang über einen Rundsendungskanal, um den Dienst betreffende Informationen zu empfangen, wenn sie vom Telekommunikationsnetz übermittelt werden.

9. Funkstation nach Anspruch 8, die ferner Mittel zum Erkennen eines Dienstidentifizierers in den Informationen, die über dem Rundsendungskanal empfangen werden, und Mittel zum Prüfen, ob der erkannte Dienstidentifizierer mit dem gespeicherten eindeutigen Dienstidentifizierer übereinstimmt, umfasst.

10. Funkstation nach Anspruch 8 oder 9, bei der die Datenkette ferner eine Angabe über einen Typ des Dienstes enthält.

## Revendications

1. Un procédé pour fournir un service à des stations sans fil (1) par l'intermédiaire d'un réseau de télécommunication (2), le service étant identifié par un identificateur de service spécifique stocké dans le réseau de télécommunication et dans au moins une station d'abonné parmi les stations sans fil, le procédé comprenant les étapes suivantes :
- on détermine un identificateur d'appel dans le réseau de télécommunication et à la station d'abonné, en appliquant une fonction de hachage à une chaîne de données incluant au moins une partie de l'identificateur de service spécifique;
- on associe la station d'abonné à l'identificateur d'appel déterminé; et
- avant d'émettre de l'information concernant le service sur un canal de diffusion, on émet vers les stations sans fil un message d'appel contenant ledit identificateur d'appel.

2. Un procédé selon la revendication 1, dans lequel l'information concernant le service, émise sur le canal de diffusion, contient l'identificateur de service spécifique, et dans lequel une station sans fil associée à l'identificateur d'appel répond au message d'appel en commutant vers le canal de diffusion, en recevant l'identificateur de service spécifique émis et en contrôlant si l'indicateur de service reçu coïncide avec l'identificateur de service stocké dans la station sans fil.

3. Un procédé selon la revendication 1 ou 2, dans lequel la chaîne de données comprend en outre une indication d'un type du service.

4. Un procédé selon l'une quelconque des revendications précédentes, dans lequel l'identificateur de service spécifique comprend une adresse associée au service et une indication d'un domaine à l'intérieur duquel cette adresse est spécifique.

5. Equipement de réseau de télécommunication pour participer à la fourniture de services à des stations sans fil (1), l'équipement comprenant :
- un moyen pour stocker des identificateurs de service spécifiques identifiant respectivement les services;
- un moyen pour déterminer un identificateur d'appel respectif associé à chacun des services, en appliquant une fonction de hachage à une chaîne de données incluant au moins une partie de l'identificateur spécifique pour ledit service; et
- un moyen pour émettre vers les stations sans fil un message d'appel incorporant l'identificateur d'appel associé à l'un des services, avant d'émettre sur un canal de diffusion de l'information concernant ledit service.

6. Equipement selon la revendication 5, dans lequel l'information concernant le service émise sur le canal de diffusion inclut l'identificateur de service spécifique.

7. Equipement selon la revendication 5 ou 6, dans lequel la chaîne de données incluant au moins une partie de l'identificateur de service spécifique inclut en outre une indication d'un type du service.

8. Une station sans fil pour communiquer par l'intermédiaire d'un réseau de télécommunication (2), la station sans fil (1) comprenant :
- un moyen pour stocker au moins un identificateur de service spécifique identifiant un service respectif avec lequel la station a un abonnement;
- un moyen pour déterminer un identificateur d'appel, en appliquant une fonction de hachage à une chaîne de données incluant au moins une partie de l'identificateur spécifique; et
- un moyen pour recevoir un message d'appel incorporant l'identificateur d'appel et, en réponse à celui-ci, commuter vers la réception sur un canal de diffusion pour recevoir de l'information concernant le service, émise par le réseau de télécommunication.

9. Une station sans fil selon la revendication 8, comprenant en outre un moyen pour détecter un identificateur de service dans l'information reçue sur le canal de diffusion, et un moyen pour contrôler si l'identificateur de service détecté coïncide avec l'identificateur de service stocké.

10. Une station sans fil selon la revendication 8 ou 9, dans laquelle la chaîne de données inclut en outre une indication d'un type du service.
